(19) Europäisches Patentamt
European Patent Office
Office européen des brevets

(11) Publication number: 0 147 991 B1

# (12) EUROPEAN PATENT SPECIFICATION

(45) Date of publication of patent specification: 06.03.91

(51) Int. Cl.⁵: C01B 33/34, C01B 33/20, C01B 25/45, C01B 35/08, C01G 28/02, C01G 30/02, C01G 31/00, C01G 37/14, C01G 39/00, C01G 45/12, C01G 49/00

(21) Application number: 84308812.1

(22) Date of filing: 17.12.84

## (54) Crystalline oxides.

(30) Priority: 19.12.83 US 562673
30.05.84 US 615391
21.08.84 US 642925

(43) Date of publication of application:
10.07.85 Bulletin 85/28

(45) Publication of the grant of the patent:
06.03.91 Bulletin 91/10

(84) Designated Contracting States:
AT BE DE FR GB IT NL SE

(56) References cited:
EP-A- 0 043 562
EP-A- 0 103 117
FR-A- 1 364 555
FR-A- 1 412 923
FR-A- 1 527 972
FR-A- 2 053 283
FR-A- 2 059 319
FR-A- 2 099 946

CHEMICAL ABSTRACTS, vol. 75, no. 10, 6th September 1971, page 323, abstract no. 68585y, Columbus, Ohio, US; E.M. FLANIGEN et al.: "Phosphorus substitution in zeolite frameworks", & ADVAN. CHEM. SER. 1971, 101 (MOLECULAR SIEVE ZEOLITES-I), 76-101

(73) Proprietor: MOBIL OIL CORPORATION
150 East 42nd Street
New York New York 10017(US)

(72) Inventor: Derouane, Eric Gerard
56 Rue des Champs Verts
B-5020 Namur (Champion)(BE)
Inventor: von Ballmoos, Roland (NMN)
144 East Delaware Avenue
Pennington, N.J. 08534(US)

(74) Representative: Carpmael, John William Maurice et al
CARPMAELS & RANSFORD 43 Bloomsbury Square
London, WC1A 2RA(GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to the synthesis of crystalline oxides from a reaction medium consisting of two liquid phases and comprising an organic or inorganic directing agent and specific reactants. This synthesis results in a crystallin oxide framework having ion-exchange properties and being readily convertible to catalytically active material.

Aluminum phosphates are taught in U.S. Patents 4,310,440 and 4,385,994, for example. Aluminum phosphate materials have electroneutral lattices and, therefore, are not useful as ion-exchangers or as catalyst components. Microporous aluminum phosphates have a composition typified as:

$xR : Al_2O_3 : (1.0 \pm 0.2) P_2O_5 : yH_2O$

wherein R is an organic amine or quaternary ammonium salt entrapped within the aluminum phosphate and playing a role as crystallization template, x and y representing the amounts of R and $H_2O$ needed to fill the microporous voids. Because of the aluminum/phosphorus atomic ratio of these materials being about unity, they display virtually no ion-exchange properties, the framework positive charge on phosphorus being balanced by corresponding negative charge on aluminum:

$AlPO_4 = (AlO_2^-)(PO_2^+)$ .

FR-A-1,364,555 and -1,412,923 describe the preparation of crystalline oxides which despite containing elements other than silicon and aluminium are still to be considered to be, or to be related to, zeolites.

The phosphorus-substituted zeolites of Canadian Patents 911,416; 911,417 and 911,418 are referred to as "aluminosilicophosphate" zeolites. Some of the phosphorus therein appears to be occluded, not structural. These latter materials containing silicon, aluminum and phosphorus are characterized by the general formula:

$M_{(x-y)}:x(AlO_2^-):(SiO_2):y(PO_2^+):zH_2O$

wherein M is a monovalent cation, x is approximately 0.125-1.5, y is 0.05-1.0 and z is the number of hydration water molecules. Structural replacement of silicon with phosphorus has been realized in materials called silica clathrates (West Germany Patent 3,128,988).

U.S. Patent 4,363,748 describes a combination of silica and aluminum-calcium-cerium phosphate as a low acid activity catalyst for oxidative dehydrogenation. Great Britain Patent 2,068,253 discloses a combination of silica and aluminum-calcium-tungsten phosphate as a low acid activity catalyst for oxidative dehydrogenation. U.S. Patent 3,801,704 teaches an aluminum phosphate treated in a certain way to impart acidity. U.S. Patent 4,228,036 teaches an alumina-aluminum phosphate-silica matrix as an amorphous body to be mixed with zeolite for use as cracking catalyst. U.S. Patent 3,213,035 teaches improving hardness of aluminosilicate catalysts by treatment with phosphoric acid. The catalysts are amorphous.

U.S. Patent 2,876,266 describes an active silicophosphoric acid or salt phase of an amorphous material prepared by absorption of phosphoric acid by premolded silicates or aluminosilicates.

Other teachings of aluminum phosphates and their preparation include U.S. Patents 4,365,095; 4,361,705; 4,222,896; 4,210,560; 4,179,358; 4,158,621; 4,071,471; 4,014,945; 3,904,550 and 3,697,550. Since their neutral framework structure is void of ion-exchange properties, they are used as catalyst supports or matrices.

U.S. Patent 4,440,871 describes various crystalline microporous materials characterized as "silicoaluminophosphates". These materials are prepared hydrothermally from aqueous gels containing reactive phosphorus, silicon and aluminum compounds and organic templating agents.

The crystalline oxides synthesized hereby are molecular sieve or other framework structures exhibiting ion-exchange properties and are easily and conveniently converted to materials having intrinsic catalytic activity. Techniques for synthesis of zeolites or aluminum phosphates taught in the art are not felt to be particularly useful for synthesis of these oxides and their substituted analogs.

Therefore, in its broadest composition of matter aspects, the present invention provides a crystalline oxide having a composition, in the anhydrous state, as follows:

$$M^{m+}_{x/m}:(XO_2)^-_{1-y}:(YO_2)^+_{1-x}:(ZO_2)_{x+y}:N^{n-}_{y/n}$$

wherein X represents one or more elements of valence plus 3, wherein Y represents one or more elements of valence plus 5, wherein Z represents one or more elements of valence plus 4, wherein the number of atoms represented by Z is less than the sum of the number of atoms represented by X and Y, wherein either X is not aluminum, Y is not phosphorus or Z is not silicon or titanium, wherein M is a cation of

valence m, wherein N is an anion of valence n, and wherein x and y are numbers of from greater than -1 to less than +1 which satisfy the relationships:

(1) if x is 0, then y is not 0,

(2) if y is 0, then x is not 0,

(3) if the atomic ratio of X/Y is greater than 1, then (x+y) is greater than 0 and x+0.6x is less than 0.4, and

(4) if the atomic ratio of X/Y is less than 1, then (x+y) is greater than 0 and 0.5 is greater than 0.5y+x, said crystalline oxide having an ion exchange capacity of at least about 0.002 meq/g.

Such a crystalline material can be formed by calcining, i.e. heating, as hereinafter described, a crystalline oxide in the as-synthesized form having a composition, in the anhydrous state, as follows:

$$A_v:M^{m+}_{x/m}:(XO_2)^-_{1-y}:(YO_2)^+_{1-x}:(ZO_2)_{x+y}:N^{n-}_{y/n}$$

wherein A is an organic directing agent, and v is the number of moles of A, and wherein X, Y, Z, M, N, X, Y, Z, m and n are as hereinbefore defined.

In its broadest synthesis aspect, the present invention provides a method for synthesis of crystalline oxides which comprises the steps of 1) preparing a two-phase reaction mixture containing particular components and comprising both a liquid organic phase and a liquid aqueous phase; 2) heating the reaction mixture at a rate of from 5°C to 200°C per hour to a temperature of from 80°C to 300°C; 3) agitating the reaction mixture in a manner sufficient to intimately admix said liquid organic and aqueous phases with-each other; 4) maintaining the agitated reaction mixture at a temperature of from 80°C to 300°C and a pH of from 2 to 9 until crystals of crystalline oxide material are formed; and 5) recovering the crystalline oxide material from the reaction mixture.

The essential components of the two-phase reaction mixture include water, sources of a) an oxide of one or more elements X having valence plus 3, b) an oxide of one or more elements Y having valence plus 5, c) an oxide of one or more elements Z having valence plus 4, d) an organic directing agent A, e) inorganic cations M and f) anions N; and a substantially water-immiscible organic solvent.

Such components are present in the following relationships:

$(A)_a:(M_2O)_b:(X_2O_3)_c:(ZO_2)_d:(Y_2O_5)e:(Solvent)_f:(anion\ source)_g:(H_2O)_h$

wherein a, b, c, d, e, f, g and h are numbers satisfying the following relationships:

a/(c+d+e) is less than 4,

b/(c+d+e) is less than 2

d/(c+e) is less than 2,

f/(c+d+e) is from 0.1 to 15,

g/(c+d+e) is less than 2, and

h/(c+d+e) is from 3 to 150,

Upon initial preparation of the reaction mixture, the source of one of the X, Y or Z oxides is dispersed or dissolved in the organic phase.

The crystalline oxide material recovered from the reaction mixture is characterized by a composition, in the anhydrous state as follows:

$$A_v:M^{m+}_{x/m}:(XO_2)^-_{1-y}:(YO_2)^+_{1-x}:(ZO_2)_{x+y}:N^{n-}_{y/n}$$

wherein v is the number of moles of A, m is the valence of cation M, n is the valence of anion N, and x and y are numbers of from greater than -1 to less than +1 which satisfy the relationships:

(1) if x is 0, then y is not 0,

(2) if y is 0, then x is not 0,

(3) if the atomic ratio of X/Y is greater than 1, then (x+y) is greater than 0 and y+0.6x is less than 0.4, and

(4) if the atomic ratio of X/Y is less than 1, then (x+y) is greater than 0 and 0.5 is greater than 0.5y+x, said crystalline oxide having an ion exchange capacity of at least about 0.002 meq/g.

The crystalline oxides prepared by the present method are effective cationic ion-exchangers and acid catalysts when the X/Y (e.g. Al/P) ratio is greater than unity. Such catalysts have an acid strength spectrum

differing from that of zeolites, which can be beneficial in some catalytic processes. For X/Y ratios lower than unity, anionic exchange properties prevail and render such materials active for base-catalyzed reactions. They also offer a new class of catalyst supports and are particularly interesting in this respect because of their high ion-exchange capacity which should enable the retention of rather high metal loadings. They will show in the latter case the same catalytic flexibility as other supported metal or metal oxide(s) catalysts. Sorption properties indicate that they are molecular shape selective and this can be advantageous in numerous catalytic processes as known in the art of zeolite catalysis.

If synthesized with an X/Y (e.g., aluminum/phosphorus) atomic ratio of greater than one, the crystalline oxide (e.g., silicophosphoaluminate) may exhibit an X/Z (e.g., aluminum/silicon) atomic ratio of greater than 1.5, and usually in the range of from 1.6 to 600. When the X/Y (e.g., aluminum/phosphorus) ratio is of less than one, it may exhibit a Y/Z (e.g., phosphorus/silicon) atomic ratio of greater than unity, usually within the range of from 1.2 to 600.

It is well recognized that aluminum phosphates exhibit a phosphorus/aluminum atomic ratio of essentially unity, and essentially no silicon.

Also, the phosphorus-substituted zeolite compositions, sometimes referred to as "aluminosilicophosphate" zeolites, have a silicon/aluminum atomic ratio of usually greater than unity, generally from 0.66 to 8.0, and a phosphorus/aluminum atomic ratio of less than unity, usually from greater than 0 to 1.

The use of a two-phase synthesis reaction mixture system, exclusive of the solids, enables one to maintain in solution in the organic phase one or more of the reactants which are normally insoluble or unstable in the aqueous phase under the present synthesis conditions. Such a procedure enables the preparation of oxides the synthesis of which is believed to be more difficult using other techniques. Further, microporous properties can be achieved for the crystalline oxides by performing inorganic syntheses in the presence of organic or inorganic directing agents. In addition to its templating role, the organic directing agent can also act as a surfactant. It can thus help the codispersion of the organic and aqueous phases containing the reagents.

As noted hereinbefore, in the synthesis method of the present invention, the reaction mixture will contain sufficient sources of Z (e.g., silicon), Y (e.g., phosphorus) and X (e.g., aluminum), directing agent(s) and an organic solvent.

The organic directing agent may be selected from the group consisting of organic mono-, di- or polyamines and onium compounds having the following formulas:

$R_4M^+X^-$ or $(R_3M^+R'M^+R_3)X_2^-$

wherein R or R' is alkyl of from 1 to 20 carbon atoms, heteroalkyl of from 1 to 20 carbon atoms, aryl, heteroaryl, cycloalkyl of from 3 to 6 carbon atoms, cycloheteroalkyl of from 3 to 6 carbon atoms, or combinations thereof; M is a tetracoordinate element (e.g. nitrogen, phosphorus, arsenic, antimony or bismuth) or a heteroatom (e.g. N, O, S, Se, P, As, etc.) in an alicyclic, heteroalicyclic or heteroaromatic structure; and X is an anion (e.g. fluoride, chloride, bromide, iodide, hydroxide, acetate, sulfate, carboxylate, etc.). When M is a heteroatom in an alicyclic, heteroalicyclic or heteroaromatic structure, such structure may be, as non-limiting examples,

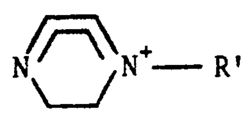 , or

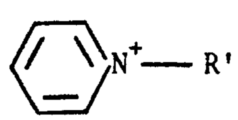

wherein R' is alkyl of from 1 to 20 carbon atoms, heteroalkyl of from 1 to 20 carbon atoms, aryl, heteroaryl, cycloalkyl of from 3 to 6 carbon atoms or cycloheteroalkyl of from 3 to 6 carbon atoms.

Particularly preferred organic directing agents for the present method include alkylamines wherein alkyl is of 1 to 3 carbon atoms and onium compounds, above defined, wherein R is alkyl of 1 to 4 carbon atoms, R' is alkylene of 1 to 6 carbon atoms, M is nitrogen and X is halide or hydroxide. Non-limiting examples of these include di-n-propylamine, tetrapropylammonium hydroxide, tetraethylammonium hydroxide, tetrapropylammonium bromide, and hexamethyl-hexane diammonium hydroxide or bromide. An inorganic hydroxide or salt useful as a pH adjustant agent can also serve as a supplemental directing agent. Non-limiting examples of such compounds are KOH, NaOH, CsOH, CsBr, NaCl, $Ca(OH)_2$, and the like.

The organic solvent used to form the two-phase reactive mixture can be any organic liquid which is substantially immiscible with water under the crystallization conditions of the present method. Non-limiting examples of such a solvent include the $C_5$-$C_{10}$ alcohols, phenols, and naphthols; and other water immiscible organic solvents. Polar organic compounds are preferred for the organic phase solvent.

The inorganic cations and anions essentially present in the reaction mixture are generally not provided by separately added components. Rather, these cations and anions will frequently come from compounds added to the reaction mixture to provide the other essential components such as the silicon, alumina and/or phosphorus sources or such as the directing agent or any pH adjustant agents which may be used.

One of the sources of X, Y or Z oxide must initially be present in the organic phase of the reaction mixture. The aqueous phase will thus comprise the directing agent, cations and anions, pH adjustant agents and those remaining essential components which are not added to the organic phase.

Examples of atoms represented by X include aluminum, iron chromium, vanadium, molybdenum, arsenic, antimony, manganese, gallium and boron, each in the plus 3 valence state. Examples of atoms represented by Y include phosphorus, arsenic, antimony and vanadium, each in the plus 5 valence state. Examples of atoms represented by Z include silicon, germanium and titanium each in the plus 4 valence state.

The aqueous phase may comprise, e.g., the aluminum and phosphorus components of synthesis mixture. These components may be incorporated into the aqueous phase by dissolving or partially dissolving a pre-formed solid crystalline aluminum phosphate material in the aqueous phase. This dissolution is accomplished by maintaining the aqueous phase at a sufficiently alkaline pH, e.g., by incorporating therein a sufficient amount of a basic material as hereinbefore described. Optionally, additional sources of aluminum and/or phosphorus, e.g., $Al_2O_3$ and/or $H_3PO_4$, may also be incorporated into the aqueous phase.

The reaction mixture of the composition hereinbefore described is heated carefully at a rate of from about 5° C to about 200° C per hour up to a temperature of from about 80° C to about 300° C and maintained within that temperature range until crystals of desired crystalline oxide form, usually from about 5 hours to about 500 hours. The pH of the reaction mixture during crystallization is carefully maintained at from about 2 to about 9. This may be accomplished by adjusting the concentration of the added base(s).

During the heat-up at crystallization steps the reaction mixture will generally be agitated in a manner sufficient to intimately admix the substantially immiscible organic and aqueous phases. Techniques for dispersing the organic and aqueous phases in each other are well know in the art. It may even be desirable to form an emulsion of the organic and aqueous phases in order to maximize the interface between these liquid phases.

Following crystallization of the desired oxide the reaction mixture containing same may be filtered and the recovered crystals may be washed, for example with water, and then dried, such as by heating at from about 25° C to about 150° C at atmospheric pressure.

In accordance with the method of the present invention, a source of aluminum and phosphorus in the synthesis mixture may be dissolved or partially dissolved aluminum phosphate. Such aluminum phosphate may be supplied in the form of an amorphous material, a crystalline material or mixtures thereof. Crystalline aluminum phosphates may have dense or open-pore type structures. Examples of the latter type of crystalline aluminum phosphates are described in U.S. Patents 4,310,440 and 4,385,994.

Examples of basic materials which may be incorporated into the aqueous phase include hydroxides of Group I metals of the Periodic Table as well as alkali metal carbonates, silicates, and hydroxides of tetraalkylammonium ions.

Additional sources of aluminum include, as non-limiting examples, any known form of aluminum oxide or hydroxide, organic or inorganic salt or compound.

Additional sources of phosphorus include, as non-limiting examples, any known form of phosphorus acids or phosphorus oxides, phosphates and phosphites, and organic derivatives of phosphorus.

Useful sources of silicon include, as non-limiting examples, any known form of silicic acid or silicon dioxide, alkoxy-or other compounds of silicon.

In a more specific illustration of a particular synthesis method in accordance with the present invention, the aqueous phase contains phosphorus and aluminum components. The organic phase with hexanol as solvent contains a germanium source, e.g. tetra-orthoalkyl germanate. The organic directing agent, e.g. tetraalkylammonium hydroxide or an amine, also acts as a surfactant to emulsify the aqueous and organic phases and optimize the interface. Germanium is progressively supplied during synthesis to the gel by hydrolysis of its organic compound and transfer of the product through the interface into the aqueous phase.

As Z, X and Y must be available simultaneously to nucleate and crystallize the desired oxide the rates

of supply of all three elements have to be comparable. This implies that when an aluminum phosphate is used as a source of aluminum and phosphorus, the dissolution of the aluminum phosphate and the hydrolysis of the organic germanium compound should be concerted. Therefore, it may be important to predissolve at least a portion of the aluminum phosphate. Even more critical will be the germanium supply rate which is dependent on factors such as the magnitude of the interface, temperature, pH of the aqueous phase, concentration, and nature of the organic solvent and of the germanium reagent.

Because the hydrolysis and transfer rates of alkoxy compounds of Z are controlled by the magnitude of the interface, as discussed earlier, Z incorporation is expected to be favored as mixing increases.

As mentioned earlier, pH is an important synthesis variable. As the formation of the oxide proceeds, pH values of around or above neutral (i.e. about 6 or more, up to a maximum of about 9) should be maintained. As the base stability of the oxides is expected to be intermediate between those of aluminum phosphates and zeolites, pH values of about or slightly above 8 are preferred. Because of the major role played by the hydrolysis of the Z-containing reagent and the necessity to control it in the present method, there is a need to have a nearly constant pH during crystallization. This can be achieved by predissolving the aluminum phosphate before addition of the other reagents.

To achieve and maintain higher pH values (pH = 8 or above), even after partial decomposition of the organic hydroxide, inorganic bases may be added. These inorganic bases can also play a role as supplemental directing agents as noted hereinbefore.

By means of the synthesis aspect of the present invention, it is possible to prepare oxides by having from about 1 to about 20 percent, in terms of mole fraction, of Z (e.g., Si), from about 35 to about 50 percent, in terms of mole fraction of X (e.g., Al) and from about 35 to about 50 percent, in terms of mole fraction of Y (e.g., P). Accordingly, by means of the synthesis aspect of the present invention, it is possible to make oxides having empirical formulae not accounted for in pentagonal compositional areas in Figures 1 and 2 of the Lok et al U.S. Patent No. 4,440,871. More particularly in this regard, X may be present in a mole fraction of from 30 to 44 percent, Y may be present in a mole fraction of from 43 to 50 percent and Z may be present in a mole fraction of from 6 to 20 percent, wherein obviously, the sum of the mole fractions of x, Y and Z is 100.

Microporous, crystalline oxide materials of the present invention have substantial ion exchange capacity and catalytic activity. To the contrary, corresponding materials of the same crystalline structure containing only aluminum, phosphorus and oxygen in the lattice structures thereof have little or no ion exchange capacity and catalytic activity. Accordingly, for example, the Alpha Value of a material according to the invention may be at least 100 percent or even at least 1000 percent greater than the Alpha Value of a corresponding material of the same crystalline structure, said corresponding material having only aluminum, phosphorus and oxygen in the lattice structure thereof. Examples of such corresponding materials are generally referred to in the Wilson et al U.S. Patent No. 4,310,440.

The oxides prepared hereby may be molecular sieves or other framework structures. When they are molecular sieves or dense materials, they will possess definite distinguishing crystalline structures which exhibit characteristic X-ray powder diffraction patterns.

When X-ray values are determined herein for the oxides of the present invention, whether molecular sieve or other structures, the radiation is the K-alpha doublet of copper and a diffractometer equipped with a scintillation counter and an associated computer is used. The peak heights, I, and the positions as a function of 2 theta, where theta is the Bragg angle, are determined using algorithms on the computer associated with the spectrometer. From these, the relative intensities, 100 $I/I_o$, where $I_o$ is the intensity of the strongest line or peak, and d (obs.) the interplanar spacing in Angstroms (A), corresponding to the recorded lines, are determined. The relative intensities are given in terms of the strongest line being taken as 100. The various cationic forms of particular oxides reveal substantially the same pattern with some shifts in interplanar spacing and variation in relative intensity. Other variations can occur, depending on the Z (e.g., silicon) to X (e.g., aluminum) and Y (e.g., phosphorus) to X (e.g., aluminum) ratios of the particular sample, as well as its degree of thermal treatment.

The oxides of the present invention are microporous or dense materials with a framework containing tetrahedrally coordinated (by oxygen) Z (e.g., Si), Y (e.g., P) and X (e.g., Al) atoms. If microporous, they show ion-exchange, acidic, and catalytic properties which resemble those of zeolites. Because of their different acid strength spectrum, however, they are potentially interesting as catalysts for acid-catalyzed conversions in which too high or too low an acidity may result in unwanted secondary reactions. Acidity associated with framework X (e.g., Al) is brought in by replacement of Y (e.g., phosphorus) with Z (e.g, silicon). Alternately, basicity associated with framework Y (e.g., P) occurs when framework X (e.g., aluminum) is replaced by Z (e.g., silicon).

The ionic radii of X, Y and Z should be sufficient to permit the formation of th proper framcwork

structure containing tetrahedral coordination. More particularly, it is felt that the ionic "Radius Ratio" of these elements should be in the range of from about 0.15 to about 0.73.

The term "Radius Ratio" is defined as the ratio of th crystal ionic radius of the element M to the crystal ionic radius of the oxygen anion, $O^{-2}$.

$$\text{Radius Ratio} = \frac{\text{crystal ionic radius of the element M}}{\text{crystal ionic radius of } O^{-2}}$$

The crystal ionlc radii of, elements are listed in the CRC Handbook of Chemistry and Physics, 61st Edition, CRC Press, Inc., 1980, pages F-216 and F-2l7, said listing incorporated herein by reference. In determining the Radius Ratio, it is necessary to use crystal ionic radii of the M atom and oxygen anion ($O^{-2}$) which have been measured by the same method.

Examples of "Radius Ratios" for various elements in various valence states are as follows:

| Element | Valence | Radius Ratio |
|---|---|---|
| As | +3 | 0.44 |
| B | +3 | 0.17 |
| Bi | +3 | 0.73 |
| Co | +2 | 0.55 |
| Cu | +2 | 0.54 |
| Fe | +2 | 0.56 |
| Fe | +3 | 0.48 |
| Ge | +2 | 0.55 |
| Ge | +4 | 0.40 |
| Mn | +2 | 0.61 |
| Sb | +3 | 0.57 |
| Ti | +3 | 0.58 |
| Ti | +4 | 0.52 |
| V | +3 | 0.56 |
| V | +4 | 0.48 |
| Zn | +2 | 0.56 |
| V | +5 | 0.45 |
| B | +1 | 0.26 |
| Ba | +1 | 1.16 |
| Ba | +2 | 1.02 |
| Ce | +3 | 0.78 |
| Cd | +1 | 0.86 |
| Cd | +2 | 0.73 |
| Cr | +1 | 0.61 |
| Cr | +2 | 0.67 |
| Cu | +1 | 0.73 |
| La | +1 | 1.05 |
| Mg | +1 | 0.62 |
| Mg | +2 | 0.50 |
| Mo | +1 | 0.70 |
| Sn | +2 | 0.70 |
| Sr | +2 | 0.85 |
| Th | +4 | 0.77 |
| Ti | +1 | 0.73 |
| Ti | +2 | 0.71 |
| Zn | +1 | 0.67 |

The oxides synthesized hereby can also be used as catalysts in intimate combination with a metal component such as silver, tungsten, vanadium, molybdenum, rhenium, chromium, manganese, or a Group

VIII metal such as platinum or palladium where, for example, a hydrogenation-dehydrogenation or oxidation function is to be performed; Such a component can be ion-exchanged into the composition, impregnated therein or intimately physically admixed therewith. Such component can be impregnated in or onto it such as for example, by, in the case of platinum, treating the crystal with a solution containing a platinum metal-containing ion. Thus, suitable platinum compounds include chloroplatinic acid, platinum chlorides and various compounds containing the platinum amine complex.

The original ions, i.e. cations or anions, of the as synthesized oxides can be replaced in accordance with techniques well known in the art, at least in part, by ion exchange with other cations or anions. Preferred replacing cations include metal ions, hydrogen ions, hydrogen precursor, e.g. ammonium, ions and mixtures thereof. Particularly preferred cations include hydrogen, rare earth metals and metals of Groups IIA, IIIA, IVA, IB, IIB, IIIB, IVB, VIB and VIII of the Periodic Table of the Elements.

A typical ion exchange technique would be to contact the synthetic crystalline oxide with a salt of the desired replacing ion or ions. Examples of such salts of cations include the halides, e.g. chlorides, nitrates and sulfates.

The as synthesized oxide prepared in accordance herewith can be beneficially converted to another form by thermal treatment. This thermal treatment is generally performed by heating one of these forms at a temperature of at least 300°C for at least 1 minute and generally not longer than 20 hours. While subatmospheric pressure can be employed for the thermal treatment, atmospheric pressure is desired for reasons of convenience. The thermal treatment can be performed at a temperature up to about 1000°C. The thermally treated product is particularly useful in the catalysis of certain hydrocarbon conversion reactions.

Further, the oxide when employed either as an adsorbent, ion-exchanger or as a catalyst in an organic compound conversion process should be dehydrated, at least partially. This can be done by heating to a temperature in the range of 200°C to 600°C in air or an inert atmosphere, such as nitrogen, etc. and at atmospheric, subatmospheric or superatmospheric pressures for between 30 minutes and 48 hours. Dehydration can also be performed at room temperature merely by placing the oxide in a vacuum, but a longer time is required to obtain a sufficient amount of dehydration. Therefore, depending upon the degree of dehydration or thermal treatment desired for the oxide it may be subjected to heating at a temperature of from about 200°C to about 1000°C for a time of from about 1 minute to about 48 hours.

The crystals of the oxide prepared by the instant invention can be shaped into a wide variety of particle sizes. Generally speaking, the particles can be in the form of a powder, a granule, or a molded product, such as an extrudate having a particle size sufficient to pass through a 2 mesh (Tyler) screen and be retained on a 400 mesh (Tyler) screen. In cases where the composition is molded, such as by extrusion, the crystals can be extruded before drying or partially dried and then extruded.

In the case of many catalysts, it is desired to incorporate the oxide with another material resistant to the temperatures and other condition employed in organic conversion processes. Such materials include active and inactive material and synthetic or naturally occurring zeolites as well as inorganic materials such as clays, silica and/or metal oxides. The latter may be either naturally occurring or in the form of gelatinous precipitates or gels including mixtures of silica and metal oxides. Use of a material in conjunction with the new oxide i.e. combined therewith, which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. These materials may be incorporated into naturally occurring clays, e.g. bentonite and kaolin, to improve the crush strength of the catalyst under commercial operating conditions. Said materials, i.e. clays, oxides, etc., function as binders for the catalyst. It is desirable to provide a catalyst having good crush strength because in commercial use it is desirable to prevent the catalyst from breaking down into powder-like materials. These clay binders have been employed normally only for the purpose of improving the crush strength of the catalyst.

Naturally occurring clays which can be composited with the new crystal include the montmorillonite and kaolin families which include the subbentonites, and the kaolins commonly known as Dixie, McNamee, Georgia and Florida clays or others in which the main mineral contituent is halloysite, kaolinite, dickite, nacrite, or anauxite. Such clays can be used in the raw sate as originally mined or initially subjected to calcination, acid treatment or chemical modification. Binders useful for compositing with the present crystal also include inorganic oxides, notably alumina or silica.

In addition to the foregoing materials, the oxide can be composited with a porous matrix material such as aluminum phosphate, silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The relative proportions of finely divided crystalline oxide material

and inorganic oxide gel matrix vary widely, with the crystal content ranging from about 1 to about 90 percent by weight and more usually, particularly when the composite is prepared in the form of beads, in the range of about 2 to about 80 weight percent of the composite.

The crystalline materials of the present invention are readily convertible to catalytically active material for a variety of organic, e.g. hydrocarbon, compound conversion processes. Such conversion processes include, as non-limiting examples, cracking hydrocarbons with reaction conditions including a temperature of from about 300°C to about 700°C, a pressure of from about 0.1 atmosphere (bar) to about 30 atmospheres and a weight hourly space velocity of from about 0.1 $hr^{-1}$ to about 20 $hr^{-1}$; dehydrogenating hydrocarbon compounds with reaction conditions including a temperature of from about 300°C to about 700°C, a pressure of from about 0.1 atmosphere to about 10 atmospheres and a weight hourly space velocity af from about 0.1 to about 20; converting paraffins to aromatics with reaction conditions including a temperature of from about 100°C to about 700°C, a pressure of from about 0.1 atmosphere to about 60 atmospheres, a weight hourly space velocity of from about 0.5 to about 400 and a hydrogen/hydrocarbon mole ratio of from about 0 to about 20; converting olefins to aromatics, e.g. benzene, toluene and xylenes, with reaction conditions including a temperature of from about 100°C to about 700°C, a pressure of from about 0.1 atmosphere to about 60 atmospheres, a weight hourly space velocity of from about 0.5 to about 400 and a hydrogen/hydrocarbon mole ratio of from about 0 to about 20; converting alcohols, e.g. methanol, or ethers, e.g. dimethylether, or mixtures thereof to hydrocarbons including aromatics with reaction conditions including a temperature of from about 275°C to about 600°C, a pressure of from about 0.5 atmosphere to about 50 atmospheres and a liquid hourly space velocity of from about 0.5 to about 100; isomerizing xylene feedstock components with reaction conditions including a temperature of from about 230°C to about 510°C, a pressure of from about 3 atmospheres to about 35 atmospheres, a weight hourly space velocity of from about 0.1 to about 200 and a hydrogen/hydrocarbon mole ratio of from about 0 to about 100; disproportionating toluene with reaction conditions including a temperature of from about 200°C to about 760°C, a pressure of from about atmospheric to about 60 atmospheres and a weight hourly space velocity of from about 0.08 to about 20; alkylating aromatic hydrocarbons, e.g. benzene and alkylbenzenes, in the presence of an alkylating agent, e.g. olefins, formaldehyde, alkyl halides and alcohols, with reaction conditions including a temperature of from about 340°C to about 500°C, a pressure of from about atmospheric to about 200 atmospheres, a weight hourly space velocity of from about 2 to about 2000 and an aromatic hydrocarbon/alkylating agent mole ratio of from about 1/1 to about 20/1; and transalkylating aromatic hydrocarbons in the presence of polyalkylaromatic hydrocarbons with reaction conditions including a temperature of from about 340°C to about 500°C, a pressure of from about atmospheric to about 200 atmospheres, a weight hourly space velocity of from about 10 to about 1000 and an aromatic hydrocarbon/polyalkylaromatic hydrocarbon mole ratio of from about 1/1 to about 16/1.

In general, therefore, catalytic conversion conditions over a catalyst comprising the oxide in active form include a temperature of from about 100°C to about 760°C, a pressure of from about 0.1 atmosphere (bar) to about 200 atmospheres (bar), a weight hourly space velocity of from about 0.08 $hr^{-1}$ to about 2000 $hr^{-1}$ and a hydrogen/organic, e.g. hydrocarbon, compound of from 0 to about 100.

In order to more fully illustrate the nature of the invention and the manner of practising same, the following examples are presented.

When Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time). It is based on the activity of the highly active silica-alumina cracking catalyst taken as an Alpha of 1 (Rate Constant = 0.016 $sec^{-1}$). In the case of zeolite HZSM-5, only 174 ppm of tetrahedrally coordinated $A1_2O_3$ are required to provide an Alpha Value of 1. The Alpha Test is described in U.S. Patent 3,3543,078 and in The Journal of Catalysis, Vol. IV, pp. 522-529 (August 1965).

For the purposes of the present specification and claims which follow, ion-exchange capacity is determined by titrating with a solution of sulfamic acid the gaseous ammonia evolved during the temperature programmed decomposition of the ammonium-form of the oxide. The method is described in Thermochimica Acta, Vol. III, pp. 113-124, 1971 by G.T. Kerr and A.W. Chester. The oxides of the present invention may have an ion exchange capacity of at least about 0.002 or even at least 0.35 meq/g.

Example I

A two-phase synthesis reaction mixture was prepared with the organic phase comprised of 12g of $Ge(OC_2H_5)_4$ and 60g l-hexanol, and the aqueous phase comprised of 23.lg $H_3PO_4$ (85%), l0g $Al_2O_3$, 37g

TEAOH (40%) and 7lg of water. The directing agent in the organic phase was tetraethylammonium hydroxide.

The reaction mixture was heated at 50° C per hour to l30° C and maintained at that temperature for 24 hours. It was then heated to l80° C and maintained there for l44 hours. During this time, mixing was obtained by spinning at 800 rpm. Initial and final pH were 6.5 and about 7 respectively.

The crystalline product was separated from the reaction mixture by filtration, water washed and then dried at 80° C. It had a composition including 0.0l% Ge, 49.35% P and 50.64% Al, percentages atomic and showed the x-ray diffraction pattern of Table l.

Example 2

A quantity of the crystalline germanophosphoaluminate of Example l was calcined at 450° C in air for 4 hours and then x-ray analysed. The results are presented in Table 2.

Table 1

| Interplanar d-Spacings (A) | Observed 2 x Theta | Relative Intensities $I/I_o$ |
|---|---|---|
| 11.7908 | 7.491 | 77.43 |
| 6.8111 | 12.987 | 11.72 |
| 5.8997 | 15.004 | 32.03 |
| 4.4617 | 19.883 | 73.68 |
| 4.2249 | 21.010 | 77.79 |
| 3.9501 | 22.490 | 100.00 |
| 3.5911 | 24.772 | 6.07 |
| 3.4177 | 26.050 | 52.92 |
| 3.0678 | 29.084 | 18.00 |
| 2.9554 | 30.216 | 24.28 |
| 2.6563 | 33.714 | 7.71 |
| 2.5804 | 34.737 | 21.87 |

Table 2

| Interplanar d-Spacings (A) | Observed 2 x Theta | Relative Intensities $I/I_o$ |
|---|---|---|
| 11.6198 | 7.602 | 94.26 |
| 6.7252 | 13.154 | 25.20 |
| 5.8292 | 15.187 | 10.87 |
| 4.4056 | 20.139 | 29.82 |
| 4.0399 | 21.984 | 15.05 |
| 3.9276 | 22.621 | 100.00 |
| 3.6255 | 24.533 | 5.17 |
| 3.3707 | 26.420 | 35.81 |
| 3.0865 | 28.904 | 18.65 |
| 3.0349 | 29.406 | 12.04 |
| 2.9222 | 30.567 | 22.28 |
| 2.6595 | 33.672 | 6.65 |

Example 3

A quantity of the crystalline germanophosphoaluminate of Example I was calcined as described in Example 2 and ammonium-exchanged using an aqueous solution of IM $NH_4NO_3$. The ion-exchange capacity measured from the evolution of ammonia was determined to be I.25 meq/g.

Example 4

The product of Example 3 was examined by Alpha Test and found to have an Alpha Value of 0.6

Example 5

A sample of the calcined product germanophosphoaluminate of Example 3 was evaluated for sorption properties to confirm its molecular sieve nature. The results in weight percent were as follows:

hexane (90 ° C): 2.87%
water (60 ° C) 0.59%

Example 6

A two-phase synthesis reaction mixture was prepared with the organic phase comprised of l2gGe-$(OC_2H_5)_4$ and 60g l-hexanol, and the aqueous phase comprised of 23.lg $H_3PO_4$ (85%), lOg $Al_2O_3$, 3lg TMAOH (25%) and 70g water. The directing agent was tetramethylammonium hydroxide. The reaction mixture was heated at 50 ° C per hour to l30 ° C and maintained at that temperature for 24 hours. It was then heated to l80 ° C and maintained there for 144 hours. During this time mixing was obtained by spinning at 800 rpm. The initial and final pH was 7.5.

The crystalline germanophosphoaluminate product was separated from the reaction mixture by filtration, water washed and then dried at 80 ° C, and had a composition including 4.4% Ge, 50.0% P, and 45.6% Al, the percentages atomic. It showed the characteristic x-ray diffraction pattern of Table 3.

Example 7

A quantity of the crystalline germanophosphoaluminate of Example 6 was calcined at 450 ° C in air for 4 hours and then x-ray analysed. The results are presented in Table 4.

Table 3

| Interplanar d-Spacings (A) | Observed 2 x Theta | Relative Intensities $I/I_O$ |
|---|---|---|
| 6.3046 | 14.036 | 48.14 |
| 4.4609 | 19.887 | 43.85 |
| 3.9898 | 22.263 | 7.52 |
| 3.6431 | 24.413 | 100.00 |
| 3.4258 | 25.988 | 68.73 |
| 3.3699 | 26.427 | 10.94 |
| 3.1550 | 28.262 | 17.00 |
| 2.8242 | 31.655 | 15.51 |
| 2.5780 | 34.769 | 22.07 |

Table 4

| Interplanar d-Spacings (A) | Observed 2 x Theta | Relative Intensities $I/I_O$ |
|---|---|---|
| 6.3051 | 14.034 | 71.43 |
| 4.4604 | 19.889 | 43.55 |
| 3.9902 | 22.261 | 6.60 |
| 2.6431 | 24.413 | 100.00 |
| 3.4255 | 25.990 | 57.80 |
| 3.1556 | 28.257 | 18.11 |
| 2.8241 | 31.656 | 17.76 |
| 2.5784 | 34.765 | 24.57 |

Example 8

A quantity of the crystalline germanophosphoaluminate of Example 6 was calcined as described in Example 7 and ammonium-exchanged using an aqueous solution of IM $NH_4NO_3$. The ion-exchange capacity measured from the evolution of ammonia was determined to be 0.405 meq/g.

## Claims

1. A synthetic, crystalline ion-exchangeable composition having a framework made up of X-, Y- and Z-centred tetrahedra cross-linked by the sharing of oxygen atoms in the proportions:

   $(XO_2)_{1-y}:(YO_2)_{1-x}:(ZO_2)_{x+y}$

   wherein X represents one or more elements of valence 3, y represents one or more elements of valence 5 and Z represents one or more elements of valence 4, the number of atoms represented by Z being less than the sum of the number of atoms represented by X and Y, and wherein either X is not aluminium, Y is not phosphorus or Z is not silicon or titanium, and x and y are each greater than -I and less than +I and are not simultaneously zero and (x+y) is greater than zero, and in which:

   (I) when the atomic ratio X/Y is greater than I, y+0.6X is less than 0.4; and

   (2) when the atomic ratio X/Y is less than I, 0.5 is greater than 0.5y+x; said composition having an ion exchange capacity of at least 0.002 meq/g and containing, in association with said framework,

anions and/or cations in overall charge balance therewith.

**2.** A composition according to claim I which further comprises, in the as-synthesised state, organic directing agent employed in synthesis.

**3.** A composition according to claim 2 wherein the organic directing agent is an amine or is an onium compound of the formula:

$R_4M^+X^-$ or $(R_3M^+R'M^+R_3)X_2^-$

wherein R and R' are each alkyl of from I to 20 carbon atoms, heteroalkyl of from I to 20 carbon atoms, aryl, heteroaryl, cycloalkyl of from 3 to 6 carbon atoms, or combinations thereof: M is a tetracoordinate element cation selected from nitrogen, phosphorus, arsenic, antimony or bismuth or a heteroatom selected from N, O, Se, Se, P or As in an alicyclic, heteroalicyclic or heteroaromatic structure; and X is an anion.

**4.** A composition according to any of claims I to 3 wherein X is selected from aluminium, iron, chromium, vanadium, molybdenum, arsenic, antimony, manganese, gallium and boron; y is selected from phosphorus, arsenic, antimony and vanadium; and Z is selected from silicon, germanium and titanium.

**5.** A composition according to any of claims I to 4 wherein X is present in a mole fraction of 30 to 44 percent, Y is present in a mole fraction of 43 to 50 percent and Z is present in a mole fraction of 6 to 20 percent.

**6.** A catalyst comprising a binder and a composition according to any of claims I to 5.

**7.** A method for synthesising a composition in accordance with claim I which comprises: a) preparing a reaction mixture comprising a liquid organic phase and a liquid aqueous phase, said reaction mixture comprising water, sources of an oxide or one or more elements X having valence plus 3, an oxide of one or more elements Y having a valence plus 5, an oxide of one or more elements Z other than Si or Ti having valence plus 4, an organic directing agent A, inorganic cations M and anions N; and a substantially waterimmiscible organic solvent, the components of said reaction mixture having the following relationships:

$(A)_a$: $(M_2O)_b$:$(X_2O_3)_c$:$(ZO_2)_d$:$(Y_2O_5)_e$:$(Solvent)_f$: (anion source)g:$(H_2O)$h

wherein a, b, c, d, e, f, g and h are numbers satisfying the following relationships:

a/(c+d+e) is less than 4,
b/(c+d+e) is less than 2,
d/(c+e) is less than 2,
f/(c+d+e ) is from 0.l to l5,
g/(c+d+e) is less than 2, and
h/(c+d+e) is from 3 to l50, wherein upon initial preparation of said reaction mixture the source of one of the X, Y or Z oxides is dispersed or dissolved in said organic phase;

b) heating said reaction mixture at a rate of from 5°C to 200°C per hour to a temperature of from 80°C to 300°C;

c) agitating said reaction mixture in a manner sufficient to intimately admix said liquid organic and aqueous phases with each other;

d) maintaining said agitated reaction mixture at a temperature of from 80°C to 300°C and pH of from 2 to 9 until crystals of said composition are formed; and

e) recovering said composition from said reaction mixture.

**8.** A method according to claim 7 wherein the organic directing agent A is an amine or an onium compound of the formula:

$R_4M^+X^-$ or $(R_3M^+R'M^+R_3)X_2^-$

wherein R and R' are each alkyl of from I to 20 carbon atoms, heteroalkyl of from I to 20 carbon atoms, aryl, heteroaryl, cycloalkyl of from 3 to 6 carbon atoms, or combinations thereof; $M^+$ is a tetracoordinate element cation selected from nitrogen, phosphorus, arsenic, antimony or bismuth or a heteroatom selected from N, O, S, Se, P or As in an alicyclic, heteroalicyclic or heteroaromatic structure; and X is an anion.

**9.** A method according to claim 8 wherein the organic directing agent A is selected from $C_1$-$C_3$

alkylamines and -onium compounds of the formula:

$R_4M^+X^-$ or $(R_3M^+R'M^+R_3)X_2^-$

wherein R is $C_1$ to $C_4$ alkyl, R' is $C_1$-$C_6$ alkylene, $M^+$ is nitrogen and X is halide in hydroxide, and wherein the organic solvent is $C_5$-$C_{10}$ alcohol.

**10.** A method according to any of claims 7 to 9 wherein source of the oxide of Z is initially present in the organic phase of the reaction mixture and wherein the pH of the agitated reaction mixture is maintained between 6 and 9.

**11.** A method according to any of claims 7 to 10 which further comprises heating the recovered composition at a temperature of from 300° C to l000° C to remove water and directing agent.

**Revendications**

**1.** Une composition cristalline échangeuse d'ions synthétique présentant une structure composée de tétraèdres centrés en X-, Y- et Z-, réticulés par le partage d'atomes d'oxygène dans les proportions:

$(XO_2)_{1-y}/(YO_2)_{1-x}/(ZO_2)_{x+y}$

dans laquelle: X représente un ou plusieurs éléments de valence 3; Y représente un ou plusieurs éléments de valence 5; et Z représente un ou plusieurs éléments de valence 4; le nombre d'atomes représentés par Z étant inférieur à la somme du nombre d'atomes représentés par X et Y, soit X ne représente pas un atome d'aluminium, Y ne représente pas un atome de phosphore, soit Z n'est ni un atome de silicium ni un atome de titane; et x et y sont chacun supérieurs à -l et inférieurs à +l et ne sont pas simultanément égaux à zéro, et (x+y) est supérieur à zéro, et dans laquelle:

(1) lorsque le rapport atomique X/Y est supérieur à 1, y + 0,6X est inférieur à 0,4; et

(2) lorsque le rapport atomique X/Y est inférieur à 1, 0,5y + x est inférieur à 0,5; ladite composition présentant une capacité d'échange d'ions d'au moins 0,002 méq/g et contenant, en association avec ladite structure, des anions et/ou des cations en équilibre de charges.

**2.** Une composition selon la revendication 1, qui comprend également, dans l'état tel que synthétisé, un agent organique directeur employé dans la synthèse.

**3.** Une composition selon la revendication 2, dans laquelle l'agent organique directeur représente un dérivé amine ou un onium de formule:

$R_4M^+X^-$ ou $(R_3M^+R'M^+R_3)X_2^-$

dans laquelle:

R et R' représentent chacun un groupement alkyle comprenant de 1 à 20 atomes de carbone, un groupement hétéroalkyle comprenant de 1 à 20 atomes de carbone, un groupement aryle, un groupe hétéroaryle, un groupement cycloalkyle comprenant de 3 à 6 atomes de carbone, ou une combinaison de ceux-ci;

M représente un cation d'un élément tétracoordonné choisi parmi l'azote, le phosphore, l'arsenic, l'antimoine ou le bismuth ou un hétéroatome choisi parmi N, O, S, Se, P et/ou As dans une structure alicyclique, hétéroalicyclique ou hétéroaromatique; et

X représente un anion.

**4.** Une composition selon l'une quelconque des revendications 1 à 3, dans laquelle X est choisi parmi l'aluminium, le fer, le chrome, le vanadium, le molybdène, l'arsenic, l'antimoine, le manganèse, le gallium et le bore; Y est choisi parmi le phosphore, l'arsenic, l'antimoine et le vanadium; et Z est choisi parmi le silicium, le germanium et le titane.

**5.** Une composition selon l'une quelconque des revendications 1 à 4, dans laquelle X est présent dans une fraction molaire comprise entre 30 et 44%, Y est présent dans une fraction molaire comprise entre 43 et 50% et Z est présent dans une fraction molaire comprise entre 6 et 20%.

**6.** Un catalyseur comprenant un liant et une composition selon l'une quelconque des revendications 1 à 5.

**7.** Un procédé de synthèse d'une composition selon la revendication 1 qui comprend:

a) la préparation d'un mélange réactionnel comprenant une phase organique liquide et une phase

aqueuse liquide, ce mélange réactionnel comprenant de l'eau, des sources d'un oxyde d'un ou plusieurs éléments X présentant une valeur plus 3, d'un oxyde d'un ou plusieurs éléments Y présentant une valence plus 5, d'un oxyde d'un ou plusieurs éléments Z différent de Si ou Ti présentant une valence plus 4, un agent organique directeur A, des anions N et des cations M minéraux, et un solvant organique quasiment non miscible à l'eau, les composants de ce milieu réactionnel présentant les relations suivantes:

$(A)_a/(M_2O)_b/(X_2O_3)_c/(ZO_2)_d/(Y_2O_5)_e/(solvant)_f/(source\ d'anion)_g/(H_2O)_h$

dans laquelle:

a, b, c, d, e, f, g et h sont des nombres satisfaisant les relations suivantes:

$a/(c+d+e)$ est inférieur à 4;

$b/(c+d+e)$ est inférieur à 2;

$e/(c+e)$ est inférieur à 2;

$f/(c+d+e)$ est compris entre 0,1 et 15;

$g/(c+d+e)$ est inférieur à 2;

$h/(c+d+e)$ est compris entre 3 et 150; dans laquelle, au cours de la préparation initiale dudit mélange réactionnel, la source de l'un des oxydes X, Y ou Z est dispersée ou dissoute dans ladite phase organique;

b) le chauffage dudit milieu réactionnel à une vitesse comprise entre 5° C et 200° C par heure, à une température comprise entre 80° C et 300° C;

c) l'agitation dudit milieu réactionnel de manière suffisante pour mélanger intimement les phases liquides organique et aqueuse l'une à l'autre;

d) le maintien dudit milieu réactionnel agité à une température comprise entre 80° C et 300° C et à un pH compris entre 2 et 9 jusqu'à ce que les cristaux de ladite composition se soient formés; et

e) la récupération de la composition à partir du milieu réactionnel.

**8.** Un procédé selon la revendication 7, dans lequel l'agent organique directeur A est un dérivé amine ou onium, de formule:

$R_4M^+X^-$ ou $(R_3M^+R'M^+R_3)X_2^-$

dans laquelle:

R et R' représentent chacun un groupement alkyle comprenant de 1 à 20 atomes de carbone, un groupement hétéroalkyle comprenant de 1 à 20 atomes de carbone, un groupement aryle, un groupe hétéroaryle, un groupement cycloalkyle comprenant de 3 à 6 atomes de carbone, ou une combinaison de ceux-ci;

$M^+$ représente un cation d'un élément tétracoordonné choisi parmi l'azote, le phosphore, l'arsenic, l'antimoine ou le bismuth ou un hétéroatome choisi parmi N, O, S, Se, P ou As dans une structure alicyclique, hétéroalicyclique ou hétéroaromatique; et

X représente un anion.

**9.** Un procédé selon la revendication 8, dans lequel l'agent organique directeur A est choisi parmi les dérivés alkylamines et onium comprenant de 1 à 3 atomes de carbone, de formule:

$R_4M^+X^-$ ou $(R_3M^+R'M^+R_3)X_2^-$

dans laquelle:

R représente un groupe alkyle en $C_1$ à $C_4$;

R' représente un groupement alkylène en $C_1$ à $C_6$;

$M^+$ représente un atome d'azote; et

X représente un halogénure dans un hydroxyde, et dans laquelle le solvant organique est un alcool en $C_5$ à $C_{10}$

**10.** Un procédé selon l'une quelconque des revendications 7 à 9, dans lequel la source de l'oxyde de Z est, au départ, présente dans la phase organique du milieu réactionnel et dans laquelle le pH du milieu réactionnel agité est maintenu entre 6 et 9.

**11.** Un procédé selon l'une quelconque des revendications 7 à 10, qui comprend en outre le chauffage de la composition récupérée à une température comprise entre 300° C et 1 000° C pour éliminer l'eau et l'agent directeur.

## Ansprüche

1. Synthetische kristalline ionenaustauschbare Zusammensetzung mit einem Gitter aus von X-, Y- und Z-zentrierten Tetraedern, die durch Teilung von Sauerstoffatomen in den Verhältnissen:

   $(XO_2)$ Ī y:$(YO_2)$Ī-x:$(ZO_2)$x + y verbunden sind

   worin X ein oder mehrere Elemente der Wertigkeit 3 darstellt, Y ein oder mehrere Elemente der Wertigkeit 5 darstellt und Z ein oder mehrere Elemente der Wertigkeit 4 darstellt, wobei die Zahl der durch Z dargestellten Atome geringer als die Summe der Zahl der Atome ist, die von X und Y dargestellt werden, und worin entweder X kein Aluminium, Y kein Phosphor oder Z kein Silicium oder Titan ist, und x und y jeweils größer als -l und kleiner als +l und nicht gleichzeitig null sind und (x + y) größer als null ist, und worin:

   (1) y + 0,6x kleiner als 0,4 ist, wenn das Atomverhältnis X/Y größer als l ist, und

   (2) 0,5 größer als 0,5y + x ist, wenn das Atomverhältnis X/Y kleiner als l ist; wobei diese Zusammensetzung eine Ionenaustauschkapazität von mindestens 0,002 mÄqu./g aufweist und in Verbindung mit dem Gitter an Anionen und/oder Kationen im gesamten Ladungsgleichgewicht damit enthält.

2. Zusammensetzung nach Anspruch l, die außerdem im so synthetisierten Zustand ein organisches Leitmittel enthält, das bei der Synthese eingesetzt wurde.

3. Zusammensetzung nach Anspruch 2, worin das organische Leitmittel ein Amin oder eine -oniumverbindung der Formel ist:

   $R_4M^+X^-$ oder $(R_3M^+R'M^+R_3)X_2^-$

   worin R und R' jeweils ein Alkyl von l bis 20 Kohlenstoffatomen, ein Heteroalkyl von l bis 20 Kohlenstoffatomen, Aryl, Heteroaryl, Cycloalkyl von 3 bis 6 Kohlenstoffatomen oder Kombinationen davon sind; M ein Kation eines vierfach koordinierten Elementes, das aus Stickstoff, Phosphor, Arsen, Antimon oder Wismut ausgewählt ist, oder ein Heteroatom, das aus N, O, S, Se, P, oder As ausgewählt ist, in alicyclischer heteroalicyclischer oder heteroaromatischer Struktur ist, und X ein Anion ist.

4. Zusammensetzung nach einem der Ansprüche l bis 3, worin X aus Aluminium, Eisen, Chrom, Vanadium, Molybdän, Arsen, Antimon, Hangan, Gallium und Bor ausgewählt ist, Y aus Phosphor, Arsen, Antimon und Vanadium ausgewählt ist und Z aus Silicium, Germanium und Titan ausgewählt ist.

5. Zusammensetzung nach einem der Ansprüche l bis 4, worin X mit einem Molbruchteil von 30 bis 44 %, Y mit einem Molbruchteil von 43 bis 50% und Z mit einem Molbruchteil von 6 bis 20% vorhanden ist.

6. Katalysator, der ein Bindemittel und eine Zusammensetzung nach einem der Ansprüche l bis 5 umfaßt.

7. Verfahren zur Synthese einer Zusammensetzung nach Anspruch l, welches umfaßt:

   a) Herstellung einer Reaktionsmischung, die eine flüssige organische und eine flüssige wässrige Phase umfaßt, wobei die Reaktionsmischung Wasser, Quellen eines Oxids oder eines oder mehrerer Elemente X mit der Wertigkeit plus 3, eines Oxids von einem oder mehreren Elementen Y mit der Wertigkeit plus 5, eines Oxids von einem oder mehreren Elementen Z, die von Si oder Ti verschieden sind, mit der Wertigkeit plus 4, ein organisches Leitmittel A, anorganische Kationen M und Anionen N und ein im wesentlichen mit Wasser nicht mischbares organisches Lösungsmittel umfaßt, wobei die Komponenten der Reaktionsmischung die folgenden Verhältnisse aufweisen:

   $(A)_a$: $(M_2O)_b$:$(X_2O_3)_c$:$(ZO_2)_d$:$(Y_2O_5)_e$:$(\text{Lösungsmittel})_f$: (Anionenquelle)g:$(H_2O)$h

   worin a, b, c, d, e, f, g und h Zahlen sind, die die folgenden Verhältnisse erfüllen:

   a/(c + d + e) ist kleiner als 4,
   b/(c + d + e) ist kleiner als 2,
   d/(c + e) ist kleiner als 2,
   f/(c + d + e) beträgt von 0,1 bis 15,
   g/(c + d + e) ist kleiner als 2, und
   h/(c + d + e) ist von 3 bis 150, wobei bei der ursprünglichen Herstellung der Reaktionsmischung die Quelle von einem der X-, Y- oder Z-Oxide in der organischen Phase dispergiert oder gelöst wird;

   b) Erwärmen der Reaktionsmischung mit einer Geschwindigkeit von 5 °C bis 200 °C pro Stunde auf eine Temperatur von 80 °C bis 300 °C;

   c) Rühren der Reaktionsmischung in einer ausreichenden Weise, um die flüssige organische und die wässrige Phase unmittelbar miteinander zu vermischen;

   d) Halten der gerührten Reaktionsmischung bei einer Temperatur von 80 °C bis 300 °C und einem pH-Wert von 2 bis 9, bis Kristalle der Zusammensetzung gebildet sind; und
e) Gewinnung der Zusammensetzung aus der Reaktionsmischung.

**8.** Verfahren nach Anspruch 7 worin das organische Leitmittel A ein Amin oder eine -oniumverbindung der Formel:
$R_4M^+X^-$ oder $(R_3M^+R'M^+R_3)X_2^-$ ist,
worin R und R' jeweils ein Aklyl von I bis 20 Kohlenstoffatomen, ein Heteroalkyl von I bis 20 Kohlenstoffatomen, Aryl, Heteroaryl, Cycloalkyl von 3 bis 6 Kohlenstoffatomen oder Kombinationen davon sind, $M^+$ ein Kation eines vierfach koordinierten Elementes, das aus Stickstoff, Phosphor, Arsen, Antimon oder Wismut ausgewählt ist, oder ein Heteroatom, das aus N, O, S, Se, P oder As ausgewählt ist, in alicyclischer, heteroalicyclischer oder heteroaromatischer Struktur ist, und X ein Anion ist.

**9.** Verfahren nach Anspruch 8 worin das organische Leitmittel A aus $C_1$-$C_3$ Alkylaminen und -oniumverbindungen der Formel ausgewählt ist:
$R_4M^+X^-$ oder $(R_3M^+R'M^+R_3)X_2^-$
worin R ein $C_1$-$C_4$-Alkyl ist, R' ein $C_1$-$C_6$-Alkylen ist, $M^+$ Stickstoff ist und X ein Halogenid oder Hydroxid ist und worin das organische Lösungsmittel ein $C_5$-$C_{10}$-Alkohol ist.

**10.** Verfahren nach einem der Ansprüche 7 bis 9 worin die Quelle des 0xids von Z in der organischen Phase der Reaktionsmischung ursprünglich vorhanden ist und worin der pH-Wert der gerührten Reaktionsmischung zwischen 6 und 9 gehalten wird.

**11.** Verfahren nach einem der Ansprüche 7 bis l0, das außerdem das Erwärmen der gewonnen Mischung auf eine Temperatur von 300° C bis 1000° C umfaßt, um das Wasser und das Leitmittel zu entfernen.